**Europäisches Patentamt**

**European Patent Office**

**Office européen des brevets**

(11) Veröffentlichungsnummer: **0 184 642**
**B1**

(12) **EUROPÄISCHE PATENTSCHRIFT**

(45) Veröffentlichungstag der Patentschrift:
23.06.89

(51) Int. Cl.⁴: **B 27 B 5/06**, B 27 C 3/06

(21) Anmeldenummer: **85113305.8**

(22) Anmeldetag: **19.10.85**

(54) Verfahren zur Herstellung von Konstruktionsbohrungen aufweisenden plattenförmigen Werkstücken, insbesondere aus Holz oder holzähnlichem Material, sowie Einrichtung zur Durchführung des Verfahrens.

(30) Priorität: 08.12.84 DE 3444929
21.06.85 DE 3522278

(43) Veröffentlichungstag der Anmeldung:
18.06.86 Patentblatt 86/25

(45) Bekanntmachung des Hinweises auf die Patenterteilung:
23.06.89 Patentblatt 89/34

(84) Benannte Vertragsstaaten:
AT CH FR GB IT LI

(56) Entgegenhaltungen:
AT-B-361 698
DE-A-1 628 949
DE-A-1 628 987

(73) Patentinhaber: **Jenkner, Erwin, Lindenstrasse 13, D-7261 Gechingen- Bergwald (DE)**

(72) Erfinder: **Jenkner, Erwin, Lindenstrasse 13, D-7261 Gechingen- Bergwald (DE)**

(74) Vertreter: **Becker, Maria, Dipl.- Phys., Auf dem Haigst 29, D-7000 Stuttgart 70 (DE)**

EP 0 184 642 B1

LIBER, STOCKHOLM 1989

## Beschreibung

Die Erfindung betrifft ein Verfahren zur Herstellung plattenförmiger Werkstücke, mit den Merkmalen des Oberbegriffes der Patentansprüche 1 bis 4 sowie eine die Merkmale des Oberbegriffes der Patentansprüche 7, 9 und 10 aufweisende Einrichtung zur Durchführung des Verfahrens.

Plattenförmige Werkstücke, die beispielsweise zu Möbeln verarbeitet werden sollen, werden üblicherweise, wie die AT-PS-361 698 zeigt, aus länglichen Plattenzuschnitten hergestellt. Diese Plattenzuschnitte werden zunächst durch Aufteilen einer Rohplatte hergestellt und dann einzeln senkrecht zu einer Schnittebene in eine Anschlagposition gebracht und zum Aufteilen in einzelne Werkstücke entlang eines Anschlages verschoben und durchtrennt.

Die einzelnen Werkstücke müssen danach jedoch noch mit Konstruktionsbohrungen, wie Flächen- und/oder Stirnbohrungen komplettiert werden. Hierzu sind sie dann, was druckschriftlich allerdings nicht belegt werden kann, auf speziellen Bohrmaschinen zusätzlich zu bearbeiten, was umständlich, zeitraubend und entsprechend teuer ist.

Jede dieser Bohrmaschinen ist dabei entweder zur Herstellung von Bohrungen in Werkstückflachseiten oder Werkstückstirnseiten ausgelegt. Sind demgemäss Werkstücke sowohl flach- als auch stirnseitig mit Bohrungen auszustatten, müssen sie auf beiden Bohrmaschinentypen weiterbearbeitet werden.

Der Erfindung liegt die Aufgabe zugrunde, ein Verfahren mit den Merkmalen des Oberbegriffes der Patentansprüche 1 bis 4 anzugeben, das den Zuschnitt und die Ausstattung plattenförmiger Werkstücke mit Konstruktionsbohrungen ermöglicht, ohne hierzu für die entsprechenden Schnitt- und Bohroperationen verschiedene Einrichtungen benutzen zu müssen. Dabei soll es die Herstellung von Werkstücken unterschiedlicher Grösse und mit unterschiedlichen Bohrbildern in Einzelfertigung rationell, ohne Zeitverlust und ohne Umrüstprobleme ermöglichen.

Diese Aufgabe wird erfindungsgemäss durch die kennzeichnenden Merkmale jeweils eines der Patentansprüche 1 bis 4 gelöst.

Erfindungsgemäss lassen sich demgemäss Konstruktionsbohrungen und zwar entweder Flächenbohrungen oder stirnseitige Bohrungen oder beide Kategorien von Bohrungen in Werkstücke einbringen, ohne dass diese nach dem Zuschneiden auf wenigstens einer Bohrmaschine weiter zu bearbeiten sind. Die Fertigungszeit solcher Werkstücke lässt sich damit auf ein Minimum reduzieren.

Zur Ausstattung von Werkstücken mit Flächenbohrungen können gemäss Patentanspruch 1 zunächst in einen Plattenzuschnitt, der in eine Anzahl von Werkstücken vereinzelt werden soll, die Flächenbohrungen für alle diese Werkstücke eingebracht werden. Es werden demgemäss an vorbestimmten Bereichen des Plattenzuschnittes entsprechende Bohrbilder eingebracht. Danach wird der Plattenzuschnitt durch Trennschnitte in die einzelnen Werkstücke aufgeteilt.

Ebensogut kann gemäss Patentanspruch 2 nach Fertigung der Flächenbohrungen jeweils für ein Werkstück dieses vom Plattenzuschnitt abgetrennt werden.

Desweiteren ermöglichen die Verfahren gemäss den Patentansprüchen 3 und 4 Werkstücke unter Beibehaltung einer Bearbeitungslage lediglich stirnseitig mit Konstruktionsbohrungen auszustatten.

Das flach- und stirnseitige Bohren von Werkstücken ist vorteilhaft nach Patentanspruch 5 möglich. Zur Durchführung der erfindungsgemässen Verfahren gemäss den Patentansprüchen 1 und 2 zum flachseitigen Bohren von Werkstücken eignet sich vorteilhaft eine Einrichtung nach Patentanspruch 7.

Zur Durchführung der erfindungsgemässen Verfahren gemäss den Patentansprüchen 3 und 4 zum stirnseitigen Bohren von Werkstücken eignet sich vorteilhaft eine Einrichtung nach Patentanspruch 9.

Zur Durchführung des erfindungsgemässen Verfahrens gemäss Patentanspruch 5 zum flach- und stirnseitigen Bohren von Werkstücken eignet sich vorteilhaft eine Einrichtung nach Patentanspruch 10.

In der Zeichnung ist ein Ausführungsbeispiel einer erfindungsgemässen Einrichtung dargestellt, die sowohl zum flach- als auch zum stirnseitigen Bohren von Werkstücken ausgelegt ist. Es zeigen:

Fig. 1 eine Draufsicht der Einrichtung, die eine mit einer einen programmierbaren Werkstückschieber aufweisenden Werkstückvorschubvorrichtung verkettete Plattenaufteilmaschine aufweist;

Fig. 2 eine Seitenansicht der Einrichtung;

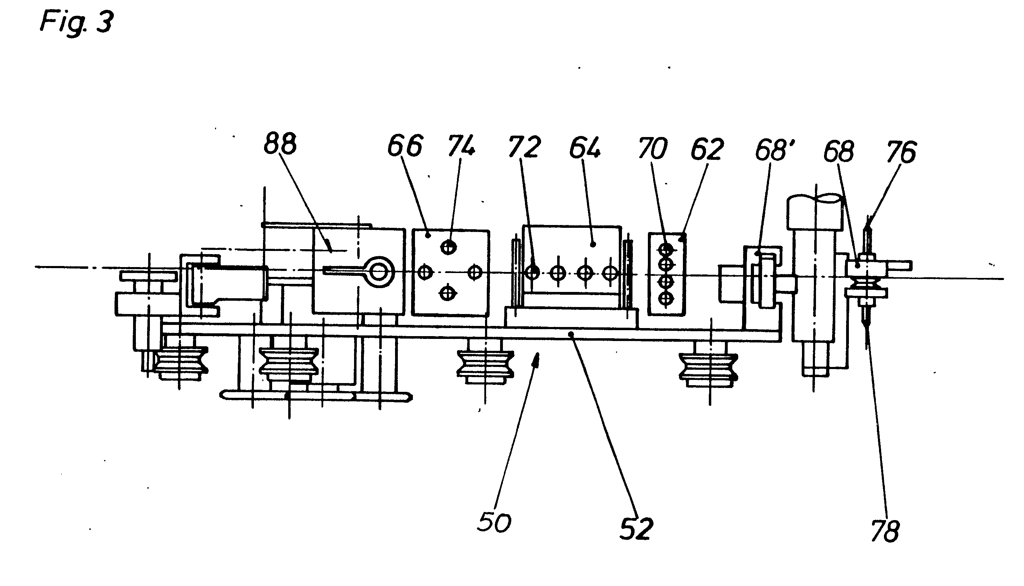

Fig. 3 eine Draufsicht auf die Bohrvorrichtung der Einrichtung;

Fig. 4 einen Ausschnitt der Fig. 2, in welchem die in Arbeitsposition gefahrene Stellung des Bohraggregates zum stirnseitigen Bohren veranschaulicht ist;

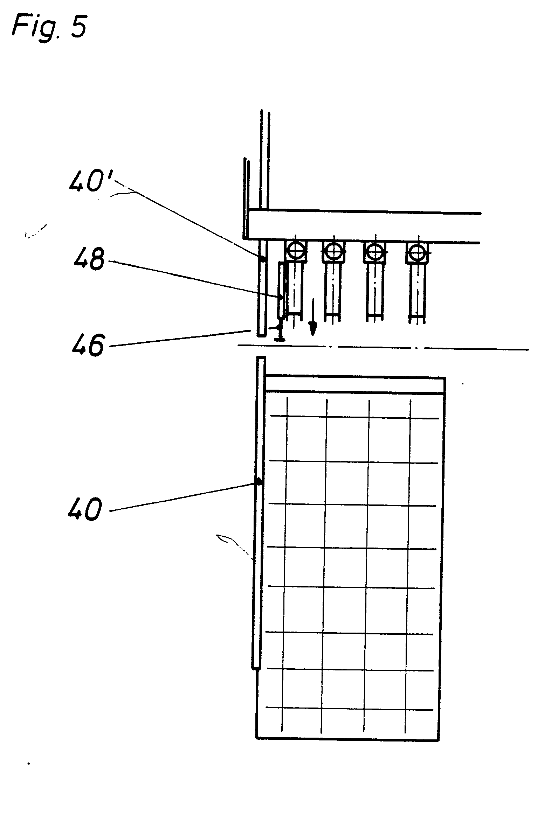

Fig. 5 einen Ausschnitt der Draufsicht der Einrichtung gemäss Fig. 1, wobei sich der Werkstückschieber im Bereich seiner vorderen Endstellung und eine an diesem vorgesehene Anschlagvorrichtung sich in Anschlagposition befinden;

Fig. 6 eine schaubildliche Ansicht eines schrankartigen, aus plattenförmigen Werkstücken hergestellten Möbels, welche Werkstücke mit der erfindungsgemässen Einrichtung herstellbar sind;

Fig. 7 eine Draufsicht auf eine Rohplatte zur Herstellung streifenförmiger Plattenzuschnitte auf der Plattenaufteilmaschine der Einrichtung;

Fig. 8 in Draufsicht die aus der Rohplatte hergestellten Plattenzuschnitte, an welchen die in diese einzubringenden Bohrungen angedeutet sind.

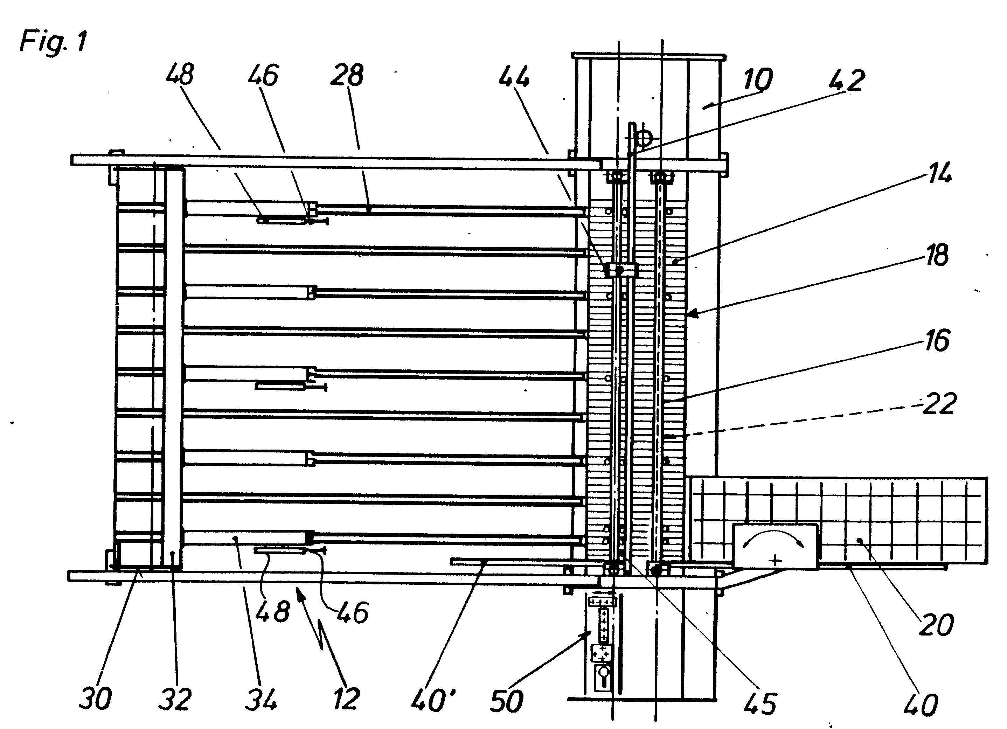

Die in Fig. 1 gezeigte Einrichtung umfasst eine Plattenaufteilmaschine 10 an sich bekannter Bauart sowie eine Werkstückvorschubvorrichtung 12 an sich bekannter Bauart, die miteinander verkettet sind.

Die Plattenaufteilmaschine 10 weist einen Werkstückauflagetisch 18 mit einer auf diesem angeordneten Werkstückspannvorrichtung, beispielsweise in Form eines pneumatisch vertikal beweglichen Druckbalkens 16, auf.

Dem die horizontale Werkstückauflagefläche 14 aufweisenden Werkstückauflagetisch 18 ist in bekannter Weise ein Werkstückanlegetisch 20 zugeordnet, der beispielsweise im Bereich des linken Endes des Werkstückauflagetisches 18 vorgesehen ist.

Längs des Werkstückauflagetisches 18 erstreckt sich in diesem ein die Trennebene der Plattenaufteilmaschine 10 definierender Sägeschlitz 22 unterhalb des Druckbalkens 16.

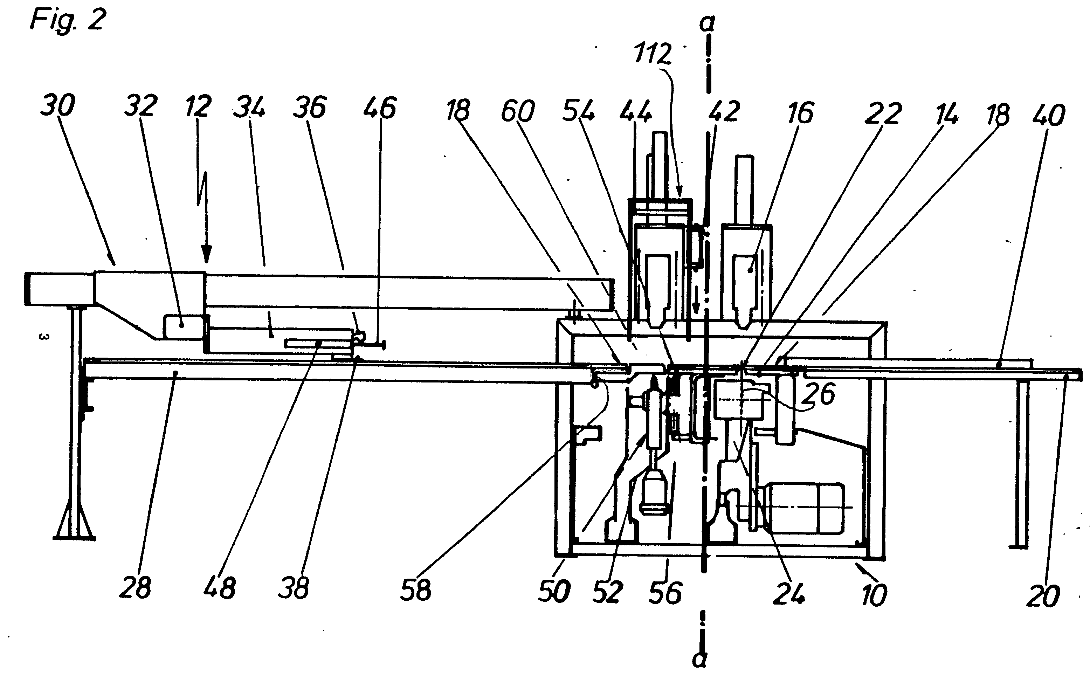

Mit 24 ist als Ganzes ein Sägewagen bezeichnet, der an der Unterseite des Werkstückauflagetisches 18 entlang einer Führung parallel zum Sägeschlitz 22 verfahrbar ist. Dieser Sägewagen 24 ist vorzugsweise mit zwei Kreissägeblättern 26 ausgestattet, die auf zueinander parallelen Wellen drehfest angeordnet und in seitlichem Abstand zueinander einstellbar vorgesehen sind. In Fig. 2 ist lediglich eines dieser Kreissägeblätter 26 dargestellt. Das eine dieser beiden Kreissägeblätter 26 dient zum Vorritzen oder auch zum Trennen.

Die Werkstückvorschubvorrichtung 12 ist an die hintere Längsseite des Werkstückauflagetisches 18 angeschlossen und weist eine Vielzahl von parallel zueinander in einer gemeinsamen horizontalen Ebene angeordneten Werkstückauflageleisten auf, die sich senkrecht zum Sägeschlitz 22 erstrecken und einen Werkstückaufnahmetisch 28 bilden. Mit 30 ist als Ganzes ein programmierbarer Werkstückschieber bezeichnet, der eine sich im Abstand oberhalb des Werkstückaufnahmetisches 28 befindende Traverse 32 aufweist, an der in seitlichem Abstand voneinander eine Vielzahl von vorzugsweise pneumatisch betätigbaren Werkstückspannzangen 34 angeordnet ist, deren Spannschenkel 36 und 38 (Fig. 2) sich in Richtung Werkstückauflagetisch 18 erstrecken.

Der Werkstückanlegetisch 20 ist in bekannter Weise mit einem sich senkrecht zum Sägeschlitz 22 erstreckenden Seitenanschlag 40 ausgestattet, der sich mit einem Teilstück 40' hinter dem Sägeschlitz 22 fortsetzt. Diesem Seitenanschlag 40 ist an der Plattenaufteilmaschine 10 oberhalb ihrer Werkstückauflagefläche 14 ein entlang einer Führungstraverse 42 verschiebbarer Queranschlag 44 zugeordnet, mit dessen Hilfe sich auf den Werkstückanlegetisch 20 aufgelegte Werkstücke an den Seitenanschlag 40 anlegen lassen. In der Nichtgebrauchsstellung des Queranschlages 44 befindet er sich im Bereich des rechten Endes des Werkstückauflagetisches 18 in einer angehobenen Ausgangsposition.

Mit 46 ist ein weiterer Anschlag bezeichnet, der aus einer Anschlagvorrichtung 48 senkrecht zum Sägeschlitz 22 horizontal ausfahrbar ist, die auf der Seite des Seitenanschlages 40 an der Traverse 32 des Werkstückschiebers 30 angeordnet ist. Vorzugsweise befindet sich auf der gegenüberliegenden Seite der Traverse 32 eben im Bereich zwischen diesen beiden Anschlagvorrichtungen falls eine solche Anschlagvorrichtung 48. Ferner können 48 weitere gleichartige Anschläge angebracht sein.

Die beiden Anschlagvorrichtungen 48 dienen dazu, aufzuteilende Plattenzuschnitte oder Rohplatten, die in Plattenschnitte aufzuteilen sind, vor Durchführung des ersten Trennschnittes relativ zum Sägeschlitz 22 zur Durchführung eines ersten Besäumschnittes auszurichten.

Die Werkstückvorschubvorrichtung 12 ist mit einer als Ganzes mit 50 bezeichneten Werkstückbohr- und Montagevorrichtung ausgestattet, mit deren Hilfe sich in plattenförmige Werkstücke sowohl Flächenbohrungen als auch Bohrungen in Stirnkanten herstellen lassen.

Diese ist zwischen dem Werkstückauflagetisch 18 und der Werkstückvorschubvorrichtung 12 unterhalb der Werkstückauflagefläche 14 angeordnet. Alternativ könnte die Werkstückbohr- und Montagevorrichtung 50 auch an der gegenüberliegenden Seite des Werkstückauflagetisches 18 angeordnet sein.

Die Bohr- und Montagevorrichtung 50 weist einen Trägerschlitten 52 auf, der längs des Werkstückauflagetisches 18 parallel zum Sägeschlitz 22 auf übereinander angeordneten Führungen 54 und 56 in Form von Schienen verschiebbar und feststellbar geführt ist. Diese Führungsschienen 54 und 56 können einen Teil des Tischgestelles des Werkstückauflagetisches 18 bilden, oder sie können Teil einer separaten Führungsvorrichtung sein, die nachträglich dem Werkstückauflagetisch 18 zugeordnet werden kann. Diese Möglichkeit zur Nachrüstung ist in der Teilanmeldung EP-A-292 635 beansprucht. Oberhalb der Bohr- und Montagevorrichtung 50 ist zwischen Werkstückauflagetisch 18 und Werkstückvorschubvorrichtung 12 eine sich parallel zum Sägeschlitz 22 erstreckende spaltförmige Aussparung 58 vorgesehen, die mittels einer Verschlussklappe 60 verschliessbar ist, sofern die Bohr- und Montagevorrichtung 50 nicht benötigt wird. Diese Verschlussklappe 60 ist zum Öffnen der spaltförmigen Aussparung 58 nach unten wegklappbar.

Auf dem Trägerschlitten 52, sind beispielsweise vier Bohraggregate in Form von Bohrköpfen 62, 64, 66, 68 angeordnet, von denen die Bohrköpfe 62 und 64 jeweils eine Reihe mit beispielsweise vier Bohrspindeln 70 bzw. 72 aufweisen, die einander räumlich entsprechend einem gewünschten Bohrbild zugeordnet sind. Dies trifft auch für die Bohrspindeln 74 des Bohrkopfes 66 zu.

Die einzelnen Bohrköpfe 62, 64, 66, 68 sind nebeneinander angeordnet, wobei die gegenseitige Zuordnung der Bohrköpfe 62 und 64 so getroffen ist, dass deren Reihe von Bohrspindeln 70, 72 in horizontaler Ebene zueinander senkrecht verlaufen. Demgemäss erstreckt sich die eine Bohrspindelreihe senkrecht und die andere Bohrspindelreihe parallel zum Sägeschlitz 22. Die Bohrköpfe 62, 64 und 66 dienen zum Einbringen von Flächenbohrungen in die Unterseite plattenförmiger Werkstücke bzw. von Plattenzuschnitte, wozu sie als Vertikalbohrköpfe in geeigneter Weise relativ zum Trägerschlitten 52 nach oben zu steuern sind. Dies kann beispielsweise pneumatisch erfolgen.

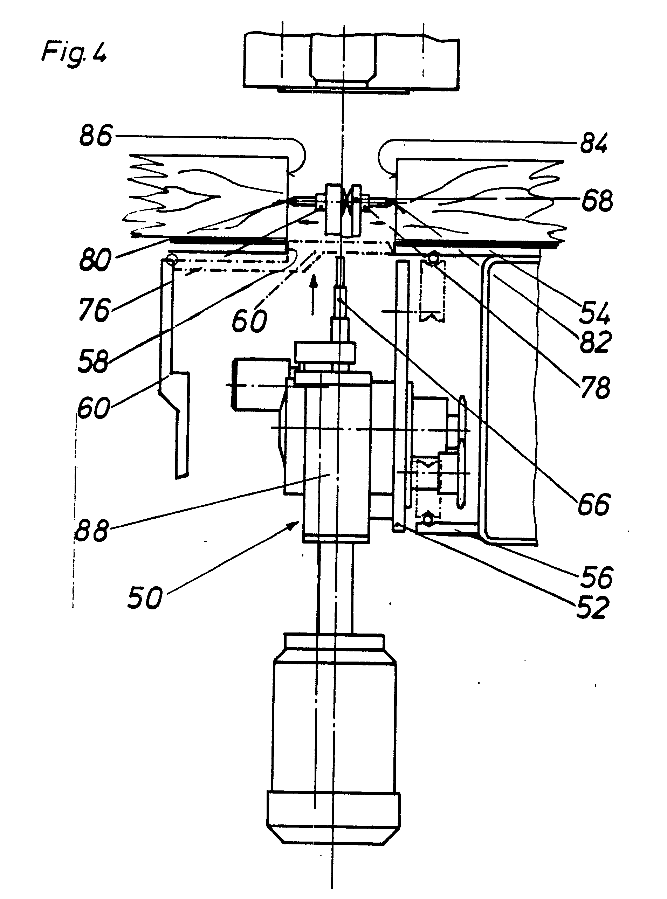

Der Bohrkopf 68 dient zur Herstellung von Bohrungen in Stirnkanten von Werkstücken. Hierzu ist dieser Bohrkopf 68 mit einem säulenförmigen Ansatz 68' ausgestattet, der im Bereich seines oberen Endes zwei vorzugsweise koaxial zueinander angeordnete Bohrspindeln 76 und 78 aufweist, die horizontal gelagert sind. Beide Bohrspindeln 76, 78 sind gemeinsam oder getrennt in gleicher oder gegenläufiger Drehrichtung antreibbar. Der Borkopf 68 ist am Trägerschlitten 52 in vertikaler Richtung, beispielsweise pneumatisch verstellbar, angeordnet, so dass er bei Nichtgebrauch, analog zu den anderen Bohrköpfen 62, 64 und 66 nach unten abtauchen kann, um die spaltförmige Aussparung 58 mittels der Verschlussklappe 60 verschliessen zu können. Aus Fig. 4 ist ersichtlich, dass in der Arbeitsposition des Bohrkopfes 68 die Bohrspindeln 76 und 78 bzw. in diese eingesetzte Bohrer 80, 82 sich in Richtung einander zugekehrter Stirnflächen 84 und 86 von Werkstücken erstrecken.

Der Trägerschlitten 52 ist ausserdem mit einer Bohr- und Montagevorrichtung 88 ausgestattet, mit deren Hilfe sich beispielsweise Beschlagteile selbsttätig in Flächenbohrungen einpressen lassen. Selbstverständlich könnten auch mehrere solcher Bohr- und Montagevorrichtungen vorgesehen sein. Der Trägerschlitten 52 ist mittels einer Transportvorrichtung relativ zu den mit Bohrungen auszustattenden Plattenzuschnitten oder plattenförmigen Werkstücken verstellbar und feststellbar, was, analog zum Werkstückschieber 30, programmgesteuert erfolgen kann. Die Werkstückbohr- und Montagevorrichtung 50 kann, je nachdem, welcher bzw. welche Bohrköpfe benötigt werden, in eine oder mehrere vorbestimmte Bearbeitungsstellungen gesteuert werden, wonach die Bohrköpfe 62, 64, 66, 68 und auch die Bohr- und Montagevorrichtung 88 in ihre Einsatzstellung vertikal nach oben gesteuert werden. Bevor ihre Bohrspindeln 70, 72, 74 bzw. Bohr- und Montageeinrichtungen in Funktion treten.

Das die Bohr- und Montagevorrichtung 50 sowie den Sägewagen 24 führende Gestell der Werkstückvorschubvorrichtung 12 ist so ausgelegt, dass sich die Werkstückbohr- und Montagevorrichtung 50 in ihrer Nichtgebrauchsstellung vorzugsweise seitlich der Werkstückvorschubvorrichtung 12 befindet und somit die Verschlussklappe 60 zum Verschliessen der Aussparung 58 betätigt werden kann.

Mit Hilfe der beschriebenen Einrichtung kann beispielsweise wie folgt gearbeitet werden:

Es sei angenommen, dass flach- und stirnseitig gebohrte, formatierte, plattenförmige Werkstücke zur Herstellung eines schrankartigen Möbels hergestellt werden sollen. Dieses Möbel besteht aus einer Vielzahl von Werkstücken, die in einem Zuge formatiert und entsprechend gebohrt auf der Einrichtung gefertigt werden sollen. Hierzu wird eine Rohplatte entsprechender Grösse auf den Werkstückauflagetisch 18 aufgelegt. Diese Rohplatte, die eine grossformatige Spanplatte sein kann, wird z. B. in für die Fertigung des Möbels erforderliche streifenförmige Plattenzuschnitte aufgeteilt. Dieses Plattenaufteilen kann automatisch erfolgen, indem in einen Steuerungscomputer der Plattenaufteilmaschine 10 ein entsprechendes Aufteilprogramm eingegeben wird, das extern von einem Rechner erstellt worden ist. Die Programmübertragung kann on Line oder mittels eines Datenträgers, beispielsweise eines Lochstreifens oder durch Eintippen von Hand in die Tastatur der Steuerung, erfolgen.

Nach Auflegen der Roh- bzw. Spanplatte und Anschlagen derselben am Seitenanschlag 40, was mit Hilfe des Queranschlages 44 bewerkstelligt wird, wird zunächst der Werkstückschieber 30 programmgesteuert in Richtung Sägeschlitz 22 der Plattenaufteilmaschine 10 gesteuert und in einem vorbestimmten Abstand zu diesem stillgesetzt. Danach fahren die Anschläge 46 der Anschlagvorrichtungen 48 des Werkstückschiebers 30 aus und fixieren die den Werkstückspannzangen 34 zugekehrte Stirnkante der Rohplatte 90 in einem vorbestimmten Abstand zum Sägeschlitz 22. Danach wird die Rohplatte 90 mit Hilfe des Druckbalkens 16 gespannt und ein erster Besäumschnitt a durchgeführt, um dadurch eine zum Seitenanschlag 40 exakt rechtwinklige Werkstückanschlagkante zu schaffen. Danach wird das Werkstück entspannt und manuell in die Werkstückspannzangen 34 des Werkstückschiebers 30 bis zum Anschlag eingeschoben. Nach einem Startimpuls erfolgt dann das Spannen in den Werkstückspannzangen 34; der Werkstückschieber 30 wird in seine Ausgangsstellung zurückgesteuert und nimmt hierbei die Rohplatte 90 mit, wonach zunächst ein weiterer Plattenanschnitt b durchgeführt wird, um zur zuerst erzeugten Besäumkante eine dieser gegenüberliegende exakt parallele weitere Besäumkante herzustellen. Danach wird die Rohplatte 90 in Plattenzuschnitte 1 - 5 aufgeteilt.

Bei der Durchführung der Längsaufteilschnitte kann mit Hilfe des Sägewagens 24 neben den Trennschnitten beispielsweise in zwei Plattenzuschnitte zugleich jeweils eine erforderliche Längsnut eingefräst werden, um später z. B. die Rückwand des Möbels mit diesen Längsnuten 92 formschlüssig in Eingriff bringen zu können.

Die nunmehr vorliegenden, streifenförmigen Plattenzuschnitte 1 - 5 werden durch die Bedienungsperson anschliessend einzeln um 90°

gedreht, mit ihrer einen Längsseite an den Seitenanschlag 40 angelegt und mit der dem Werkstückschieber 30 zugekehrten Stirnseite zunächst an dessen gemäss Fig. 1 linken Anschlag 46 der Anschlagvorrichtung 48 angelegt, wozu der Werkstückschieber 30 zunächst in Richtung Plattenaufteilmaschine 10 in eine Bereitschaftsstellung gesteuert wird. Sind mehrere, gleichartig zu bearbeitende Plattenzuschnitte erforderlich, so können diese parallel zueinander in die vorstehend erläuterte Position gebracht werden.

Nach einem Startimpuls wird mittels des Druckbalkens 16 der Plattenzuschnitt gespannt und mit Hilfe des Sägewagens 24 wieder ein stirnseitiger Besäumschnitt durchgeführt. Nach dem Computerprogramm wird nun dieser Plattenzuschnitt zunächst entweder nur mit Bohrungen an einander gegenüberliegenden Stirnkanten ausgestattet oder mit an dessen einer Flachseite vorzusehenden Flächenbohrungen.

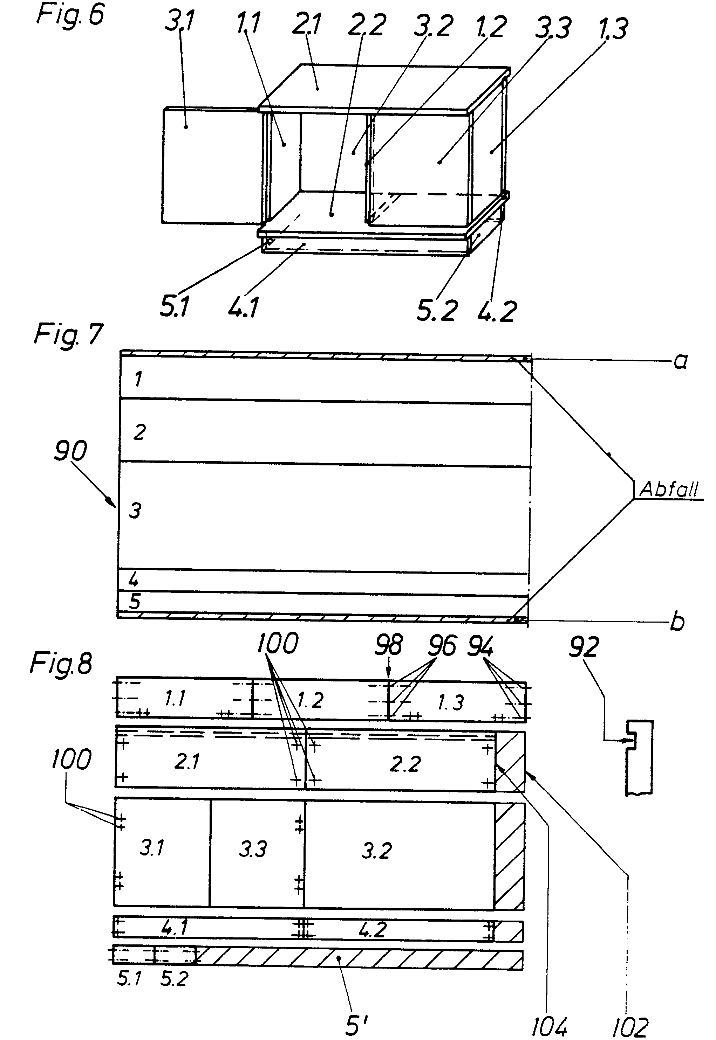

Gemäss Fig. 8 ist der Plattenzuschnitt 1 lediglich mit jeweils einer Anzahl von stirnseitig vorzusehenden Bohrungen auszustatten. Hiernach ist nach Durchführung eines ersten stirnseitigen Besäumschnittes die Werkstückbohr- und Montagevorrichtung 50 in ihre Einsatzposition zu verfahren, in der hierzu anschliessend der Bohrkopf 68 für das stirnseitige Bohren vertikal nach oben in seine in Fig. 4 dargestellte Arbeitsposition gesteuert wird. Danach werden mit Hilfe seiner Bohrspindeln 76 nacheinander beispielsweise drei Bohrungen 94 eingebracht, wozu der Trägerschlitten 52 nach Fertigstellung der ersten Bohrung 94 parallel zum Sägeschlitz 22 bzw. in eine neue Bohrposition zu verfahren ist, bevor dann die Bohrspindel 76 ihre Vorschubbewegung ausführt.

Sind die stirnseitigen Bohrungen 94 hergestellt, taucht der Bohrkopf 68 so weit ab, dass der Plattenzuschnitt 1 mit dem gebohrten Stirnende in die Werkstückspannzangen 34 des Werkstückschiebers 30 manuell eingeschoben und dort gespannt werden kann. Anschliessend fährt der Werkstückschieber 30 programmgesteuert in eine erste Mitnahmestellung zurück, durch die der Plattenzuschnitt 1 zum Sägeschlitz 22 derart eingestellt wird, dass anschliessend ein Trennschnitt 98 durchgeführt werden kann. Ist dieser erfolgt, wird der Werkstückschieber 30 gemäss dem Steuerprogramm erneut um einen solchen Weg in Richtung seiner hinteren Ausgangsstellung gesteuert und wiederum festgelegt, dass nunmehr die zuletzt hergestellte Stirnfläche 84 des formatierten Werkstückes 1,3 sich in einer Position befindet, in der mit Hilfe der Bohrspindel 78 des Bohrkopfes 68 die stirnseitigen Bohrungen eingebracht werden können (s. Fig. 4). Danach wird dieses Werkstück 1,3 der Einrichtung entnommen und der restliche Teil des Plattenzuschnittes 1 in der vorbeschriebenen Weise in der Einrichtung bearbeitet, also programmgesteuert zunächst die eine Stirnfläche des in der Folge herzustellenden Werkstückes 1,2 gebohrt, danach der Plattenzuschnitt 1 entsprechend nach hinten d. h. entgegen der Vorschubrichtung des Werkstückschiebers 30 verschoben, anschliessend durchtrennt, und schliesslich werden die restlichen Stirnbohrungen hergestellt. Danach liegen beispielsweise drei formatierte, plattenförmige und stirnseitig gebohrte Werkstücke 1,1 - 1,3 vor. In der gleichen Weise wird auch der schmale streifenförmige Plattenzuschnitt 5 bearbeitet, wobei hierbei das Teilstück 5' als Abfall anfällt.

Eine weitere vorteilhafte Bearbeitungsmöglichkeit der Plattenzuschnitte 1 und 5 kann darin bestehen, den Plattenzuschnitt 1 an einem Stirnende zu besäumen, an dieser Stirnseite zu bohren, danach in die Werkstückspannzangen 34 zu schieben, zu spannen und den Plattenzuschnitt 1 über seine gesamte Länge zurückzuziehen und an seinem anderen Stirnende zu besäumen. Nach diesem Besäumschnitt wird die hergestellte Stirnkante gebohrt, worauf der Plattenzuschnitt 1 in die dritte Schnittposition eingestellt wird, um das Teilstück 1,3 vom restlichen Teilstück des Plattenzuschnittes 1 abzutrennen bzw. den Trennschnitt 98 durchzuführen. In der Folge wird das restliche Teilstück 1,1; 1,2 zurückgezogen, um für das stirnseitige Bohren positioniert zu werden. Das zuvor abgetrennte Werkstück 1,3 wird manuell entlang des Seitenanschlages 40 gegen einen zuvor aktivierten Anschlag 45 geschoben, und nach einem Startimpuls wir der weitere Arbeitsablauf gestartet, nämlich Spannen mittels einer Spannvorrichtung 112 und wechselseitiges oder gleichzeitiges stirnseitiges Bohren. Danach ist das fertige Werkstück 1,3 zu entnehmen; das restliche Teilstück 1,1; 1,2 des Plattenzuschnittes 1 wird in die nächste Schnittposition eingestellt und danach der Trennschnitt durchgeführt. Anschliessend wiederholt sich der vorbeschriebene Verfahrens- bzw. Bearbeitungsablauf.

Ferner kann folgendermassen gearbeitet werden:

Sind die Bohrungen 94 an einem Stirnende des Plattenzuschnittes 1 hergestellt, taucht der Bohrkopf 68 so weit ab, dass der Plattenzuschnitt 1 mit dem gebohrten Stirnende in die Werkstückspannzangen 34 des Werkstückschiebers 30 manuell eingeschoben und dort gespannt werden kann. Anschliessend zieht der Werkstückschieber 30 programmgesteuert den Plattenzuschnitt 1 über seine gesamte Länge zurück, positioniert für einen Besäumschnitt. Nach Ausführung des Besäumschnittes wird der Plattenzuschnitt 1 programmgesteuert weiter in die erste stirnseitige Bohrposition zurückgezogen, gespannt, stirnseitig gebohrt, anschliessend in entgegengesetzter Richtung um eine Werkstücklänge vorgeschoben, durchtrennt und wieder zurückgezogen in die stirnseitige Bohrposition. Das abgetrennte Werkstück wird an den Anschlag 45 geschoben. Beide Werkstücke werden dann an den sich gegenüberliegenden Stirnseiten gespannt und in beide Stirnseiten die Bohrungen mittels der Bohrspindeln 76 und 78 eingebracht. Das damit fertiggestellte vordere Werkstück wird entnommen und der am Werkstückschieber 30 gespannte restliche Teil des Plattenzuschnittes 1 wird wieder um eine Werkstücklänge vorgeschoben, positioniert und durchtrennt. Alle weiteren Schritte wiederholen sich so lange, bis der Plattenzuschnitt ganz aufgearbeitet ist.

Die übrigen Plattenzuschnitte 2 - 4 sind bei dem gezeigten Möbel gemäss Fig. 6 lediglich mit Flächenbohrungen 100 auszustatten. Hierzu wird wie folgt verfahren:

Nach einem Startimpuls wird der Werkstückschieber 30 in eine vordere Anschlagposition gesteuert, wobei der Anschlag 46 ausgefahren und die Stirnkante 102 an diesen angelegt wird. Daraufhin wird z. B. der Plattenzuschnitt 2 gespannt. Danach wird ein Besäumschnitt zur Erzeugung einer Stirnkante 104 durchgeführt. Die erzeugte Stirnkante 104 wird in den Werkstückspannzangen 34 zum Anschlag gebracht, wonach der Plattenzuschnitt 2 in diesen gespannt und durch den Werkstückschieber 30 durch Verstellen desselben in Richtung seiner hinteren Ausgangsposition relativ zu der in ihre Bearbeitungsstellung gesteuerten Werkstückbohr- und Montagevorrichtung 50 so verschoben und danach festgespannt wird, dass anschliessend in vorbestimmten Bereichen des Plattenzuschnittes 2 mit Hilfe der Bohrköpfe 62 und 64 oder ggf. mit Hilfe des Bohrkopfes 66 die entsprechenden Bohrbilder für die Flächenbohrungen 100 über die gesamte Länge des Plattenzuschnittes 2 erzeugt werden können. Sind sämtliche Flächenbohrungen 100 in die eine Flachseite des Plattenzuschnittes 2 bzw. 3 oder 4 eingebracht, wird der Plattenzuschnitt mit Hilfe des Werkstückschiebers 30 taktweise in die entgegengesetzte Richtung in vorbestimmte Positionen verschoben, nach jedem Vorschub mittels des Druckbalkens 16 auf dem Werkstückauflagetisch 18 festgelegt und anschliessend jeweils durchtrennt. Hierbei fallen dann die einzelnen Werkstücke 2,1; 2,2 bzw. 3,1; 3,2 bzw. 4,1; 4,2 an, die dann fertig formatiert vorliegen und mit sämtlichen Flächenbohrungen ausgestattet sind.

Sind Werkstücke sowohl mit Flächenbohrungen 100 als auch mit stirnseitig anzuordnenden Bohrungen 94, 96 auszustatten, so kann man zuerst in die entsprechenden Plattenzuschnitte sämtliche Flächenbohrungen 100 einbringen und danach, wie vorstehend erläutert, die stirnseitigen Bohrungen 94, 96 im Zuge des Auftrennens der Plattenzuschnitte herstellen.

Es ist klar, dass zur Durchführung des Verfahrens auch eine Einrichtung geeignet ist, die nicht computergesteuert ist.

## Patentansprüche

1. Verfahren zur Herstellung plattenförmiger Werkstücke, bei dem ein aus einer Rohplatte (90) hergestellter länglicher Plattenzuschnitt (2; 3; 4) in Längsrichtung senkrecht zu einer Schnittebene ausgerichtet, danach quer zu dieser in eine Anschlagposition verschoben, festgelegt und zum Aufteilen in einzelne Werkstücke (1,1 bis 5,2) durchtrennt wird,

   dadurch gekennzeichnet

   dass bei erstmalig festgelegtem Plattenzuschnitt (2; 3; 4) in dessen eine Flachseite zu einem Werkstück (2,1 oder 2,2; 3,1 oder 3,2; 4,1 oder 4,2) gehörende Flächenbohrungen (100) eingebracht werden, dass danach der Plattenzuschnitt (2; 3; 4) zum Einbringen von zu wenigstens einem weiteren Werkstück gehörenden Flächenbohrungen (100) um eine vorbestimmte Strecke in Vorschubrichtung weitertransportiert und danach gebohrt wird und dass nach Fertigstellung aller Flächenbohrungen (100) für alle Werkstücke (2,1 und 2,2; 3,1 und 3,3; 4,1 und 4,2) der Plattenzuschnitt (2; 3; 4) jeweils nach entsprechendem Verschieben zum Aufteilen in Werkstücke durchtrennt wird.

2. Verfahren zur Herstellung plattenförmiger Werkstücke, bei dem ein aus einer Rohplatte (90) hergestellter, länglicher Plattenzuschnitt (2; 3; 4) in Längsrichtung senkrecht zu einer Schnittebene ausgerichtet, danach quer zu dieser in eine Anschlagposition verschoben, an einem Stirnende erfasst und zum Aufteilen in einzelne Werkstücke (1,1 bis 5,2) in Längsrichtung verschoben und durchtrennt wird, dadurch gekennzeichnet, dass der Plattenzuschnitt (2; 3; 4) an einem Stirnende gespannt, danach über seine gesamte Länge zurückgezogen und anschliessend zum taktweisen Bohren von Flächenbohrungen (100) in die entgegengesetzte Richtung verschoben und dabei gebohrt wird und dass nach jeder dem Maß einer Werkstücklänge entsprechenden taktweisen Verstellung des Plattenzuschnittes (2; 3; 4) dieser festgelegt und durchtrennt wird.

3. Verfahren zur Herstellung plattenförmiger Werkstücke, bei dem ein aus einer Rohplatte (90) hergestellter, länglicher Plattenzuschnitt (2; 3; 4) in Längsrichtung senkrecht zu einer Schnittebene ausgerichtet, danach quer zu dieser in eine Anschlagposition verschoben, festgelegt und zum Aufteilen in einzelne Werkstücke (1,1 bis 5,2) durchtrennt wird, dadurch gekennzeichnet, dass der Plattenzuschnitt (1; 5) an einer Stirnseite gebohrt, anschliessend in Vorschubrichtung um einen einer Seitenlänge eines Werkstückes (1,1; 1,2; 1,3 bzw. 5,1; 5,2) entsprechenden Weg verschoben, danach gespannt und durchtrennt wird, dass in der Folge das vom Plattenzuschnitt (1; 5) abgetrennte Werkstück (1,1 oder 1,2 oder 1,3 bzw. 5,1 oder 5,2) in Vorschubrichtung verschoben, gespannt und an der gegenüberliegenden Stirnseite gebohrt und abtransportiert wird und dass der restliche Teil des Plattenzuschnittes (1; 5) in Vorschubrichtung in eine Anschlagposition verschoben und nach Bohren seiner in Vorschubrichtung vorne liegenden Stirnseite nochmals in gleicher Richtung um einen der Seitenlänge eines Werkstückes entsprechenden Weg verschoben, gespannt und durchtrennt wird, worauf sich die gleichen Verfahrensschritte zur Fertigstellung weiterer, aus dem Plattenzuschnitt (1; 5) herzustellender Werkstücke wiederholen.

4. Verfahren zur Herstellung plattenförmiger Werkstücke, bei dem ein aus einer Rohplatte (90) hergestellter, länglicher Plattenzuschnitt (2; 3; 4) in Längsrichtung senkrecht zu einer Schnittebene ausgerichtet, danach quer zu dieser in eine Anschlagposition verschoben, an einem Stirnende erfasst und zum Aufteilen in einzelne Werkstücke (1,1 bis 5,2) in Längsrichtung verschoben, gespannt und durchtrennt wird, dadurch gekennzeichnet, dass

a) der Plattenzuschnitt (1) entgegen der Vorschubrichtung in eine Anschlagposition verschoben;

b) an seiner der Schnittebene zugekehrten Stirnseite gebohrt, danach zum Ablängen eines Werkstückes (1,3) in Vorschubrichtung transportiert und durchtrennt wird;

c) anschliessend sowohl der Plattenzuschnitt (1) als auch das abgetrennte Werkstück (1,3) in Vorschubrichtung in einander entgegengesetzte Richtungen in eine Bohrposition bewegt, festgespannt und an ihren einander gegenüberliegenden Stirnseiten (84, 86) gebohrt werden und

d) schliesslich das Werkstück (1,3) entnommen und der Plattenzuschnitt (1) zum Ablängen eines weiteren Werkstückes (1,2) verschoben und durchtrennt werden, worauf sich die Verfahrensschritte c) und d) wiederholen.

5. Verfahren nach Anspruch 1 oder 2, dadurch gekennzeichnet, dass die in Vorschubrichtung weisende Stirnfläche (86) eines vom Plattenzuschnitt (1) abgetrennten, flachseitig gebohrten Werkstückes (1,1 oder 1,2 oder 1,3) gebohrt und das Werkstück anschliessend in gleicher Richtung in eine neue Position verschoben, gespannt und danach dessen andere Stirnfläche (84) gebohrt wird.

6. Verfahren nach Anspruch 5, dadurch gekennzeichnet, dass nach dem Bohren der einen Stirnfläche (86) das Werkstück (1,1 oder 1,2 oder 1,3) in eine neue Position verschoben, gespannt und ein weiteres Werkstück senkrecht zur Schnittebene ausgerichtet, in die anfängliche Anschlagposition des zuvor an einer Stirnfläche (86) gebohrten Werkstückes (1,1 oder 1,2 oder 1,3) gebracht und gespannt wird, dass anschliessend die einander zugekehrten Stirnflächen (84; 86) beider Werkstücke gebohrt werden und dass schliesslich das an der einen Stirnfläche (86) gebohrte Werkstück (1,1 oder 1,2 oder 1,3) in die Lage des zuvor an beiden Stirnflächen (84, 86) gebohrten Werkstückes transportiert und in dessen ursprüngliche Position ein weiteres Werkstück gebracht und wiederum beide einander zugekehrten Stirnflächen (84; 86) nacheinander gebohrt werden.

7. Einrichtung zur Durchführung des Verfahrens nach Anspruch 1 oder 2, mit einem einen Sägeschlitz (22) aufweisenden Werkstückauflagetisch (18), dessen horizontale Werkstückauflagefläche (14) eine Werkstückspannvorrichtung (16) sowie ein Seitenanschlag (40) zugeordnet sind, der im Bereich des einen Sägeschlitzendes, sich zum Sägeschlitz (22) senkrecht erstreckend, vorgesehen ist und dem ein unter Tisch längs des Sägeschlitzes (22) verfahrbarer, mit wenigstens einem Kreissägeblatt (26) ausgestatteter Sägewagen (24) zugeordnet ist, gekennzeichnet durch eine Werkstückvorschubvorrichtung (12) mit einem programmierbaren, Werkstückspannzangen (34) aufweisenden Werkstückschieber (30), der zum Sägeschlitz (22) quer und horizontal verstellbar ist und durch den ein Werkstück in dessen beiden Bewegungsrichtungen mitnehmbar und in vorbestimmten Positionen relativ zum Sägeschlitz (22) festlegbar ist, und durch eine zwischen dem Werkstückauflagetisch (18) und der Werkstückvorschubvorrichtung (12) angeordnete, parallel zum Sägeschlitz (22) verstellbare Bohrvorrichtung (50), die wenigstens ein Bohraggregat (62) mit mindestens einer vertikal angeordneten Bohrspindel (70) aufweist, und der eine weitere Werkstückspannvorrichtung (112) sowie ein Stirnanschlag (45) zugeordnet sind.

8. Einrichtung nach Anspruch 7, dadurch gekennzeichnet, dass das Bohraggregat (62) oder dessen Bohrspindel (70) in Vorschubrichtung vertikal bewegbar sind.

9. Einrichtung zur Durchführung des Verfahrens nach Anspruch 3 oder 4, mit einem einen Sägeschlitz (22) aufweisenden Werkstückauflagetisch (18), dessen horizontale Werkstückauflagefläche (14) eine Werkstückspannvorrichtung (16) sowie ein Seitenanschlag (40) zugeordnet sind, der im Bereich des einen Sägeschlitzendes, sich zum Sägeschlitz (22) senkrecht erstreckend, vorgesehen ist und dem ein unter Tisch längs des Sägeschlitzes (22) verfahrbarer, mit wenigstens einem Kreissägeblatt (26) ausgestatteter Sägewagen (24) zugeordnet ist, gekennzeichnet durch eine Werkstückvorschubvorrichtung (12) mit einem programmierbaren, Werkstückspannzangen (34) aufweisenden Werkstückschieber (30), der zum Sägeschlitz (22) quer und horizontal verstellbar ist und durch den ein Werkstück in dessen beiden Bewegungsrichtungen mitnehmbar und in vorbestimmten Positionen relativ zum Sägeschlitz (22) festlegbar ist, und durch eine zwischen dem Werkstückauflagetisch (18) und der Werkstückvorschubvorrichtung (12) angeordnete, parallel zum Sägeschlitz (22) verstellbare Bohrvorrichtung (50), die mit wenigstens einem vertikal verstellbaren und feststellbaren Bohraggregat (68) ausgestattet ist, dass zwei koaxial oder parallel einander zugeordnete und sich in horizontaler Ebene quer zum Sägeschlitz (22) erstreckende Bohrspindeln (76, 78) aufweist, die in einander entgegengesetzten Vorschubrichtungen quer zum Sägeschlitz (22) bewegbar sind und der eine weitere Werkstückspannvorrichtung (112) sowie ein Stirnanschlag (45) zugeordnet sind.

10. Einrichtung zur Durchführung des Verfahrens nach Anspruch 5 oder 6, mit einem einen Sägeschlitz (22) aufweisenden Werkstückauflagetisch (18), dessen horizontale Werkstückauflagefläche (14) eine Werkstückspannvorrichtung (16) sowie ein Seitenanschlag (40) zugeordnet sind, der im Bereich des einen Sägeschlitzendes, sich zum Sägeschlitz (22) senkrecht erstreckend, vorgesehen ist und dem ein unter Tisch längs des Sägeschlitzes (22) verfahrbarer, mit wenigstens einem Kreissägeblatt (26) ausgestatteter Sägewagen (24) zugeordnet ist, gekennzeichnet durch eine Werkstückvorschubvorrichtung (12) mit einem programmierbaren, Werkstückspannzangen (34) aufweisenden Werkstückschieber (30), der zum Sägeschlitz (22) quer und horizontal verstellbar ist und durch den ein Werkstück in dessen beiden Bewegungsrichtungen mitnehmbar und in vorbestimmten Positionen relativ zum Sägeschlitz (22) festlegbar ist, und durch eine zwischen dem Werkstückauflagetisch (18) und der Werkstückvorschubvorrichtung (12) angeordnete, parallel zum Sägeschlitz (22) verstellbare Bohrvorrichtung (50), die wenigstens ein Bohraggregat (62) mit mindestens einer vertikal angeordneten Bohrspindel (70) und ein Bohraggregat (68) mit zwei koaxial oder parallel einander zugeordneten und sich in horizontaler Ebene quer zum Sägeschlitz (22) erstreckenden Bohrspindeln (76, 78) aufweist, die in einander entgegengesetzten Vorschubrichtungen quer zum Sägeschlitz (22) bewegbar sind und der eine weitere Werkstückspannvorrichtung (112) sowie ein Stirnanschlag (45) zugeordnet sind.

11. Einrichtung nach einem der vorhergehenden Ansprüche 7 bis 10, gekennzeichnet durch mindestens einen aus einer Freigabestellung in eine Gebrauchsstellung steuerbaren Anschlag (46), an den ein Werkstück mit seiner dem Werkstückschieber (30) zugekehrten Kante in einer ersten Besäumposition anschlagbar ist.

12. Einrichtung nach einem der vorhergehenden Ansprüche 7 bis 11, gekennzeichnet durch einen zwischen dem Sägeschlitz (22) und einer Stirnanschlagvorrichtung (48) vorgesehenen weiteren Stirnanschlag (45).

13. Einrichtung nach einem der vorhergehenden Ansprüche 7 bis 12, gekennzeichnet, durch einen parallel zum Sägeschlitz (22) verfahrbaren Queranschlag (44).

14. Einrichtung nach einem der vorhergehenden Ansprüche 7 bis 13, dadurch gekennzeichnet, dass der Sägewagen (24) mindestens zwei Kreissägeblätter (26) aufweist, die in seitlichem Abstand zueinander einstellbar und unterschiedlich hoch aus dem Sägeschlitz (22) ausfahrbar sind.

15. Einrichtung nach einem der vorhergehenden Ansprüche 8 bis 14, deren Bohrvorrichtung mindestens zwei Vertikalbohrköpfe (62; 64) aufweist, dadurch gekennzeichnet, dass die Vertikalbohrköpfe (62; 64) jeweils mindestens einer Reihe von Bohrspindeln (70 bzw. 72) aufweisen, wobei sich die Spindelreihe des einen Vertikalbohrkopfes (64) zum Sägeschlitz (22) parallel und die des anderen zu diesem quer erstreckt.

16. Einrichtung nach einem der vorhergehenden Ansprüche 7 bis 15, dadurch gekennzeichnet, dass die Bohrvorrichtung (50) einen die Bohrköpfe (62 bis 68) tragenden Trägerschlitten (52) aufweist, der entlang einer zum Sägeschlitz (22) parallel angeordneten Führung (54, 56) horizontal verfahrbar und feststellbar ist.

17. Einrichtung nach Anspruch 16, dadurch gekennzeichnet, dass die Führung des Trägerschlittens (52) durch das Gestell des Werkstückauflagetisches (18) gebildet ist.

18. Einrichtung nach Anspruch 16 oder 17, dadurch gekennzeichnet, dass auf dem Trägerschlitten (52) mindestens ein weiterer Vertikalbohrkopf (66) zur Herstellung eines vorbestimmten Bohrbildes und wenigstens eine Bohr- und Montagevorrichtung (88) zum selbsttätigen Montieren von Beschlagteilen u. dgl. angeordnet sind.

19. Einrichtung nach einem der vorhergehenden Ansprüche 14 bis 17, dadurch gekennzeichnet, dass der Trägerschlitten (52) samt Führung (54, 56) unterhalb der Werkstückauflagefläche (14) angeordnet und oberhalb seiner Bewegungsebene zwischen Werkstückauflagetisch (18) und Werkstückvorschubvorrichtung (12) eine sich parallel zum Sägeschlitz (22) erstreckende spaltförmige Aussparung (58) vorgesehen ist, die mittels einer nach unten in eine Freigabestellung verschwenkbaren Verschlussklappe (60) verschliessbar ist, und dass der Queranschlag (44) oberhalb der Werkstückauflagefläche (14) zwischen Werkstückauflagetisch (18) und Werkstückvorschubvorrichtung (12) angeordnet ist.

## Claims

1. Process for the production of panel-type workpieces wherein an elongate panel blank (2; 3; 4) made from a raw board (90) is aligned in the longitudinal direction perpendicularly to a cutting plane, then displaced transversely to said cutting plane into a stop position, immobilized and severed in order to split it up into individual workpieces (1.1 to 5.2), characterized in that when the panel blank (2; 3; 4) is immobilized for the first time, flat face bores (100) belonging to one workpiece (2.1 or 2.2; 3.1 or 3.2; 4.1 or 4.2) are made in one flat side of said panel blank, in that said panel blank (2; 3; 4) is subsequently conveyed further over a predetermined distance in the direction of advance for flat face bores (100) belonging to at least one further workpiece to be made therein, and said panel blank is then bored, and in that after completion of all of said flat face bores (100) for all of said workpieces (2.1 and 2.2; 3.1 and 3.2; 4.1 and 4.2), said panel blank (2; 3; 4) is displaced by a corresponding amount at a time and severed in order to split it up into workpieces.

2. Method for the production of panel-type workpieces wherein an elongate panel blank (2; 3; 4) made from a raw board (90) is aligned in the longitudinal direction perpendicularly to a cutting plane, then displaced transversely to said cutting plane into a stop position, gripped at an end face and displaced in the longitudinal direction and severed in order to split it up into individual workpieces (1.1 to 5.2), characterized in that said panel blank (2; 3; 4) is clamped at an end face, then pulled back throughout its entire length and in order for flat face bores (100) to be bored in a clocked manner is subsequently displaced in the opposite direction and bored, and in that after each clocked adjustment of said panel blank (2; 3; 4) corresponding to the dimensions of a workpiece length, said panel blank (2; 3; 4) is immobilized and severed.

3. Process for the production of panel-type workpieces wherein an elongate panel (2; 3; 4) made from a raw board (90) is aligned in the longitudinal direction perpendicularly to a cutting plane, then displaced transversely to said cutting plane into a stop position, immobilized and severed in order to split it up into individual workpieces (1.1 to 5.2), characterized in that said panel blank (1; 5) is bored at an end face, subsequently displaced in the direction of advance through a distance corresponding to a side length of a workpiece (1.1; 1.2; 1.3 or 5.1; 5.2), then clamped and severed, in that said workpiece (1.1 or 1.2 or 1.3; or 5.1 or 5.2) severed from said panel blank (1; 5) is subsequently displaced in the direction of advance, clamped and bored at the opposite end face and conveyed away, and in that the remaining portion of said panel blank (1; 5) is displaced in the direction of advance into a stop position and after its end face located at the front in the direction of advance has been bored is displaced again in the same direction through a distance corresponding to the side length of a workpiece, clamped and severed, whereupon the same procedural steps for finishing further workpieces to be made from said panel blank (1; 5) are repeated.

4. Process for the production of panel-type workpieces wherein an elongate panel blank (2; 3; 4) made from a raw board (90) is aligned in the longitudinal direction perpendicularly to a cutting plane, then displaced transversely to said cutting plane into a stop position, gripped at an end face and displaced in the longitudinal direction, clamped and severed in order to split it up into individual workpieces (1.1 to 5.2), characterized in that

a) said panel blank (1) is displaced opposite to the direction of advance into a stop position;
b) bored at its end face facing said cutting plane, then conveyed in the direction of advance and severed in order to cut a workpiece (1.3) to length;
c) subsequently both said panel blank (1) and said severed workpiece (1.3) are moved in the direction of advance in opposite directions into a boring position, clamped and bored at their opposite end faces (84, 86); and
d) finally said workpiece (1.3) is removed and said panel blank (1) is displaced and severed in order to cut a further workpiece (1.2) to length, whereupon the procedural steps c) and d) are repeated.

5. Process according to claims 1 or 2, characterized in that the end face (86) pointing in the direction of advance on a workpiece (1.1 or 1.2 or 1.3) which has been severed from said panel blank (1) and bored on its flat side is bored and said workpiece is subsequently displaced in the same direction into a new position, clamped and its other end face (84) is then bored.

6. Process according to claim 5, characterized in that after said one end face (86) has been bored, said workpiece (1.1 or 1.2 or 1.3) is displaced into a new position, clamped and a further workpiece aligned perpendicularly to said cutting plane, brought into the initial stop position of said workpiece (1.1 or 1.2 or 1.3) previously bored at its end face (86) and clamped, in that said end faces (84; 86) of said two workpieces facing each other are then bored, and in that said workpiece (1.1 or 1.2 or 1.3) which has been bored at said one end face (86) is finally conveyed into the position of said workpiece which has been previously bored at both end faces (84, 86) and a further workpiece is brought into its original position and again both end faces (84; 86) facing each other are bored one after the other.

7. Apparatus for carrying out the process according to claims 1 or 2, comprising a workpiece support table (18) having a saw slit (22) and the horizontal workpiece support surface (14) of said workpiece support table having associated therewith a workpiece clamping device (16) and also a side stop (40) which is arranged in the region of one saw slit end, extends perpendicularly to said saw slit (22) and has associated therewith a saw carriage (24) which is displaceable beneath said table along said saw slit (22) and is equipped with at least one circular saw blade (26), characterized by a workpiece advancing device (12) having a programmable workpiece slide (30) which comprises workpiece collets (34), is transversely and horizontally adjustable in relation to said saw slit (22) and by means of which a workpiece can be carried along in both of its directions of motion and immobilized in predetermined positions relative to said saw slit (22), and by a boring device (50) which is arranged between said workpiece support table (18) and said workpiece advancing device (12) and is adjustable parallel to said saw slit (22), said boring device comprising at least one boring unit (62) with at least one vertically arranged boring spindle (70), and a further workpiece clamping device (112) and also an end face stop (45) being associated with said boring device.

8. Apparatus according to claim 7, characterized in that said boring unit (62) or its boring spindle (70) are vertically movable in the direction of advance.

9. Apparatus for carrying out the process according to claims 3 or 4, comprising a workpiece support table (18) having a saw slit (22) and the horizontal workpiece support surface (14) of said workpiece support table having associated therewith a workpiece clamping device (16) and also a side stop (40) which is arranged in the region of one saw slit end, extends perpendicularly to said saw slit (22) and has associated therewith a saw carriage (24) which is displaceable beneath said table along said saw slit (22) and is equipped with at least one circular saw blade (26), characterized by a workpiece advancing device (12) having a programmable workpiece slide (30) which comprises workpiece collets (34), is transversely and horizontally adjustable in relation to said saw slit (22) and by means of which a workpiece can be carried along in both of its directions of motion and immobilized in predetermined positions relative to said saw slit (22), and by a boring device (50) which is arranged between said workpiece support table (18) and said workpiece advancing device (12) and is adjustable parallel to said saw slit (22), said boring device being equipped with at least one vertically adjustable and immobilizable boring unit (68) which comprises two boring spindles (76, 78) associated coaxially or parallel with each other and extending in a horizontal plane transversely to said saw slit (22), said boring spindles being movable in opposite directions of advance transversely to said saw slit (22), and a further workpiece clamping device (112) and also an end face stop (45) being associated with said boring device.

10. Apparatus for carrying out the process according to claims 5 or 6, comprising a workpiece support table (18) having a saw slit (22) and the horizontal workpiece support surface (14) of said workpiece support table having associated therewith a workpiece clamping device (16) and also a side stop (40) which is arranged in the region of one saw slit end, extends perpendicularly to said saw slit (22) and has associated therewith a saw carriage (24) which is displaceable beneath said table along said saw slit (22) and is equipped with at least one circular saw blade (26), characterized by a workpiece advancing device (12) having a programmable workpiece slide (30) which comprises workpiece collets (34), is transversely and horizontally adjustable in relation to said saw slit (22) and by means of which a workpiece can be carried along in both of its directions of motion and immobilized in predetermined positions relative to said saw slit (22), and by a boring device (50) which is arranged between said workpiece support table (18) and said workpiece advancing device (12) and is adjustable parallel to said saw slit (22), said boring device comprising at least one boring unit (62) with at least one vertically arranged boring spindle (70) and a boring unit (68) with two boring spindles (76, 78) associated coaxially or parallel with each other and extending in a horizontal plane transversely to said saw slit (22), said boring spindles being movable in opposite directions of advance transversely to said saw slit (22), and a further workpiece clamping device (112) and also an end face stop (45) being associated with said boring device.

11. Apparatus according to one of the preceding claims 7 to 10, characterized by at least one stop (46) which is drivable from a released position to an operating position and against which a workpiece may be brought to rest with its edge facing said workpiece slide (30) in a first trimming position.

12. Apparatus according to one of the preceding claims 7 to 11, characterized by a further end face stop (45) arranged between said saw slit (22) and an end face stop device (48).

13. Apparatus according to one of the preceding claims 7 to 12, characterized by a transverse stop (44) which is displaceable parallel to said saw slit (22).

14. Apparatus according to one of the preceding claims 7 to 13, characterized in that said saw carriage (24) comprises at least two circular saw blades (26) which are adjustable in laterally spaced relation to each other and are extendable out of said saw slit (22) to different heights.

15. Apparatus according to one of the preceding claims 8 to 14, the boring device of which comprises at least two vertical boring heads (62; 64), characterized in that said vertical boring heads (62; 64) each have at least one row of boring spindles (70 and 72, respectively), with the spindle row of the one vertical boring head (64) extending parallel to said saw slit (22) and that of the other one extending transversely thereto.

16. Apparatus according to one of the preceding claims 7 to 15, characterized in that said boring device (50) comprises a carriage-type carrier (52) which carries said boring heads (62 to 68) and is horizontally displaceable and immobilizable along a guide (54, 56) arranged parallel to said saw slit (22).

17. Apparatus according to claim 16, characterized in that said guide of said carriage-type carrier (52) is formed by the frame of said workpiece support table (18).

18. Apparatus according to claims 16 or 17, characterized in that at least one further vertical boring head (66) for producing a predetermined bore distribution and at least one boring and assembling device (88) for automatically assembling fittings and the like are arranged on said carriage-type carrier (52).

19. Apparatus according to one of the preceding claims 14 to 17, characterized in that said carriage-type carrier (52) together with said guide (54, 56) are arranged beneath said workpiece support surface (14), and there is provided above the plane of motion of said carriage-type carrier between said workpiece support table (18) and said workpiece advancing device (12) a slit-shaped recess (58) which extends parallel to said saw slit (22) and is closable by a closure flap (60) which can be swivel led in a downward direction into a released position, and in that said transverse stop (44) is arranged above said workpiece support surface (14) between said workpiece support table (18) and said workpiece advancing device (12).

## Revendications

1. Procédé pour fabriquer des pièces en forme de plaque, dans lequel une plaque découpée longitudinale (2; 3; 4) réalisée à partir d'une plaque brute (90) est orientée, en direction longitudinale, perpendiculairement à un plan de coupe, puis est déplacée, transversalement à celui-ci, dans une position de butée, est fixée et est séparée en pièces individuelles (1,1 à 5,2),

caractérisé en ce que, pour la plaque découpée (2; 3; 4) fixée pour la première fois, des alésages de surface (100) appartenant à une pièce (2,1 ou 2,2; 3,1 ou 3,2; 4,1 ou 4,2) sont réalisés dans un côté plan de celle-ci, en ce que, ensuite, la plaque découpée (2; 3; 4) est transportée, dans la direction d'avance, d'une étendue prédéterminée pour réaliser des alésages de surface (100) appartenant à au moins une autre pièce, et, ensuite, est alésée, et en ce que, après réalisation de tous les alésages de surface (100) pour toutes les pièces (2,1 et 2,2; 3,1 et 3,3; 4,1 et 4,2) la plaque découpée (2; 3; 4) est à chaque fois séparée en pièces, après un déplacement correspondant.

2. Procédé pour fabriquer des forme de plaque, dans lequel une plaque découpée longitudinale (2 3; 4), réalisée à partir d'une plaque brute (90), est orientée, en direction longitudinale, perpendiculairement a un plan de coupe, puis est déplacée, transversalement à celui-ci, dans une position de butée, est saisie à une exremité frontale et déplacée, en direction longitudinale, et séparée en pièces individuelles (1,1 à 5,2),

caractérisé en ce que la plaque découpée (2; 3; 4) est serrée à une extrémité frontale, puis ramenée sur toute sa longueur et, ensuite, déplacée dans la direction opposée pour le perçage cadencé d'alésages de surface (100) et est alésée, et en ce que, après chaque réglage cadencé correspondant à la valeur d'une longueur de pièce, de la plaque découpée (2; 3; 4) celle-ci est fixée et découpée.

3. Procédé pour fabriquer des pièces en forme de plaque, dans lequel une plaque découpée longitudinale (2; 3; 4) réalisée à partir d'une plaque brute (90), est orientée, en direction longitudinale, perpendiculairement à un plan de coupe, puis déplacée dans une position de butée, transversalement à celui-ci, fixée et séparée en pièces individuelles (1,1 à 5,2),

caractérisé en ce que la plaque découpée (1; 5) est alésée sur une face frontale, puis déplacée, en direction d'avance, d'une distance correspondant à une longueur latérale d'une pièce (1,1; 1,2; 1,3 ou 5,1; 5,2), puis serrée et découpée, en ce que, par la suite, la pièce (1,1 ou 1,2 ou 1,3 ou 5,1 ou 5,2) séparée de la plaque découpée (1; 5) est déplacée dans la direction d'avance, serrée et alésée sur la face frontale opposée, et est évacuée, et en ce que la partie restante de la plaque découpée (1; 5) est déplacée dans la direction d'avance dans une position de butée et, après perçage de sa face frontale se trouvant à l'avant dans la direction d'avance, est déplacée encore une fois dans la même direction d'une distance correspondant à la longueur latérale d'une pièce, serrée et découpée, après quoi les mêmes étapes de procédé se répètent pour fabriquer d'autres pièces à réaliser à partir de la plaque découpée (1; 5).

4. Procédé pour fabriquer des pièces en forme de plaque, dans lequel une plaque découpée longitudinale (2; 3; 4) réalisée à partir d'une plaque brute (90), est orientée, en direction longitudinale, perpendiculairement à un plan de coupe, puis déplacée, transversalement à celui-ci, dans une position de butée, saisie à une extrémité frontale et déplacée en direction longitudinale pour être séparée en pièces individuelles (1,1 à 5,2), serrée et découpée,

caractérisé en ce que:

a) la plaque découpée (1) est déplacée, dans une position de butée, à l'encontre de la direction d'avance;

b) elle est alésée sur une face frontale proche du plan de coupe, puis transportée, dans la direction d'avance, pour tronçonner une pièce (1,3), et est découpée;

c) ensuite, aussi bien la plaque découpée (1) que la pièce séparée (1,3) sont déplacées, dans la direction d'avance, dans des sens opposés l'un à l'autre, dans une position de perçage, serrées et alésées sur leurs faces frontales en regard l'une de l'autre (84, 86), et

d) enfin, la pièce (1,3) est retirée et la plaque découpée (1) est déplacée pour tronçonner une autre pièce (1,2) et est découpée, après quoi les étapes de procédé c) et d) sont répétées.

5. Procédé selon la revendication 1 ou 2,

caractérisé en ce que la face frontale, dans la direction d'avance, (86) d'une pièce (1,1 ou 1,2 ou 1,3) alésée sur son côté plan, séparée de la plaque découpée (1), est alésée et la pièce est ensuite déplacée dans la même direction dans une nouvelle position, serrée et, alors, l'autre face frontale de celle-ci (84) est alésée.

6. Procédé selon la revendication 5,

caractérisé en ce que, après le perçage d'une face frontale (86), la pièce (1,1 ou 1,2 ou 1,3) est déplacée dans une nouvelle position, serrée et une autre pièce est orientée perpendiculairement au plan de coupe, amenée et serrée dans la position de butée initiale de la pièce (1,1 ou 1,2 ou 1,3) préalablement alésée sur une face frontale (86), en ce que, ensuite, les faces frontales (84, 86) proches l'une de l'autre des deux pièces sont alésées, et en ce que, enfin, la pièce (1, 1 ou 1,2 ou 1, 3) alésée sur une face frontale (86) est transportée dans la position de la pièce préalablement alésée sur les deux faces frontales (84, 86), et une autre pièce est amenée dans la position d'origine de celle-ci et, de nouveau, les deux faces frontales proches l'une de l'autre (84, 86) sont alésées l'une après l'autre.

7. Installation pour la mise en oeuvre du procédé selon la revendication 1 ou 2, comportant une table de support de pièces (18) présentant une voie de scie (22), à la surface de support de pièces horizontale (14) de laquelle sont associés un dispositif de serrage de pièces (16) ainsi qu'une butée latérale (40), qui est prévue dans la zone d'une extrémité de la voie de scie, en s'étendant perpendiculairement à la voie de scie (22) et à laquelle est associé un chariot de sciage (24), équipé d'au moins une lame de scie circulaire (26) déplaçable sous la table le long de la voie de scie (22),

caractérisée par un dispositif d'avance de pièces (12) comportant une coulisse de pièce (30) programmable, présentant des pinces de serrage de pièce (34), coulisse qui peut être réglée horizontalement et transversalement par rapport à la voie de scie (22) et grâce à laquelle une pièce peut être entraînée dans les deux sens de déplacement de celle-ci et être fixée dans des positions prédéterminées par rapport à la voie de scie (22), et par un dispositif de perçage (50) réglable parallèlement à la voie de scie (22) agencé entre la table de support de pièces (18) et le dispositif d'avance de pièces (12), lequel présente au moins un groupe de perçage (62) ayant au moins une broche de perçage (70) agencée verticalement et auquel sont associés un autre dispositif de serrage de pièces (112) ainsi qu'une butée frontale (45).

8. Installation selon la revendication 7,

caractérisée en ce que le groupe de perçage (62) ou la broche de celui-ci (70) sont verticalement mobiles dans la direction d'avance.

9. Installation pour la mise en oeuvre du procédé selon la revendication 3 ou 4, comportant une table de support de pièces (18) présentant une voie de scie (22), à la surface de support de pièces horizontale (14) de laquelle sont associés un dispositif de serrage de pièces (16) ainsi qu'une butée latérale (40), qui est prévue dans la zone d'une extrémité de la voie de scie, en s'étendant perpendiculairement à la voie de scie (22), et à laquelle est associé un chariot de sciage (24), muni d'au moins une lame de soie circulaire (26) déplaçable sous la table le long de la voie de scie (22),

caractérisée par un dispositif d'avance de pièces (12) comportant une coulisse de pièce (30) programmable, présentant des pinces de serrage de pièce (34), coulisse qui est déplaçable horizontalement et transversalement par rapport à la voie de scie (22) et grâce à laquelle une pièce peut être entraînée dans les deux sens de mouvement de celle-ci et être fixée, dans des positions prédéterminées, par rapport à la voie de scie (22), et par un dispositif de perçage (50) réglable parallèlement à la voie de scie (22), et agencé entre la table de support de pièces (18) et le dispositif d'avance de pièces (12), qui est muni d'au moins un groupe de perçage (68) réglable verticalement et fixable, qui présente deux broches de perçage (76, 78) s'étendant, dans un plan horizontal, transversalement à la voie de scie (22) et associées l'une à l'autre coaxialement ou parallèlement, qui sont déplaçables transversalement à la voie de scie (22), dans des sens d'avance opposés l'un à l'autre, et auquel sont associés un autre dispositif de serrage de pièces (112) ainsi qu'une butée frontale (45).

10. Installation pour la mise en oeuvre du procédé selon la revendication 5 ou 6, comportant une table de support de pièces (18) présentant une voie de scie (22), à la surface de support de pièces horizontale (14) de laquelle sont associés un dispositif de serrage de pièces (16) ainsi qu'une butée latérale (40), qui est prévue dans la zone d'une extrémité de la voie de scie, en s'étendant perpendiculairement à la voie de scie (22), et à laquelle est associé un chariot de sciage (24) muni d'au moins une lame de scie circulaire (26) et déplaçable sous la table le long de la voie de scie (22),

caractérisée par un dispositif d'avance de pièces (12) ayant une coulisse de pièce (30) programmable présentant des pinces de serrage de pièce (34), coulisse qui est déplaçable horizontalement et transversalement par rapport à la voie de scie (22) et grâce à laquelle une pièce peut être entraînée dans ses deux sens de déplacement et être fixée, dans des positions prédéterminées, par rapport à la voie de scie (22), et par un dispositif de perçage (50) réglable parallèlement à la voie de scie (22) et agencé entre la table de support de pièces (18) et le dispositif d'avance de pièces (12), qui présente au moins un groupe de perçage (62) ayant au moins une broche de perçage agencée verticalement (70) et un groupe de perçage (68) ayant deux broches de perçage (76, 78) s'étendant, dans un plan horizonat, transversalement à la voie de scie (22) et associées l'une à l'autre coaxialement ou parallèlement qui sont déplaçables, dans des sens d'avance opposés l'un à l'autre, transversalement à la voie de scie (22) et auquel sont associés un autre dispositif de serrage de pièces (112) ainsi qu'une butée frontale (45).

11. Installation selon une des revendications 7 à 10 précédentes,

caractérisée par au moins une butée (46) commandable hors d'une position de libération dans une position d'utilisations, sur laquelle une pièce peut venir en butée par son bord proche de la coulisse (30) dans une première position de découpe.

12. Installation selon une des revendications 7 à 11 précédentes,

caractérisée par une autre butée frontale (45) prévue entre la voie de scie (22) et un dispositif de butée frontale (48).

13. Installation selon une des revendications précédentes 7 à 12,

caractérisée par une butée transversale (44) déplaçable parallèlement à la voie de scie (22).

14. Installation selon une des revendications précédentes 7 à 13,

caractérisée en ce que le chariot de sciage (24) comporte au moins deux lames de scie circulaire (26), qui sont réglables l'une par rapport à l'autre en ce qui concerne leur écartement latéral et peuvent se déployer hors de la voie de scie (22) à différentes hauteurs.

15. Installation selon une des revendications 8 à 14 précédentes, dont le dispositif de perçage présente au moins deux têtes de perçage verticales (62; 64),

caractérisée en ce que les têtes de perçage verticales (62; 64) présentent, à chaque fois, au moins une rangée de broches de perçage (70 ou 72), la rangée de broches d'une tête de perçage verticale (64) s'étendant parallèlement à la voie de scie (22) et la rangée de broches de l'autre tête perpendiculairement à celle-ci.

16. Installation selon une des revendications précédentes 7 à 15,

caractérisée en ce que le dispostif de perçage (50) présente un chariot de support (52) portant les têtes de perçage (62 à 68), qui peut être déplacé horizontalement le long d'un guidage (54, 56) agencé parallèlement à la voie de scie (22) et être fixé.

17. Installation selon la revendication 16,

caractérisée en ce que le guidage du chariot de support (52) est formé par le bâti de la table de support de pièces (18).

18. Installation selon la revendication 16 ou 17,

caractérisée en ce que, sur le chariot de support (52), sont agencées au moins une autre tête de perçage verticale (66) pour réaliser un motif d'alésage prédéterminé et au moins un dispositif de montage et d'alésages (88) pour le montage automatique de garnitures ou analogues.

19. Installation selon une des revendications précédentes 14 à 17,

caractérisée en ce que le chariot de support (52), y compris le guidage (54, 56), est agencé sous la surface de support de pièces (14) et, au-dessus de son plan de mouvement entre la table de support de pièces (18) et le dispositif d'avance de pièces (12), est prévu un évidement (58) en forme de fente s'étendant parallèlement à la voie de scie (22), qui peut être fermé au moyen d'un volet de fermeture (60) pouvant pivoter vers le bas dans une position de libération, et en ce que la butée transversale (44) est agencée au-dessus de la surface de support de pièces (14) entre la table de support de pièces (18) et le dispositif d'avance de pièces (12).

Fig. 1

EP 0 184 642 B1

Fig. 2

EP 0 184 642 B1

# Fig. 3

EP 0 184 642 B1

Fig. 4

Fig. 5

Fig. 6

3.1  1.1  2.1  2.2  3.2  1.2  3.3  1.3

5.1  4.1  5.2  4.2

Fig. 7

a

1

2

90

3

Abfall

4

5

b

Fig. 8

100  98  96  94  92

1.1  1.2  1.3

100  2.1  2.2

100  3.1  3.3  3.2

4.1  4.2

5.1  5.2

5'

104  102

11